# DEMANDE DE BREVET EUROPEEN

(11) **EP 1 348 364 A1**
(43) Date de publication de la demande: **01.10.2003**
(21) Numéro de dépôt: 03290737.0
(22) Date de dépôt: 24.03.2003
(51) Int. Cl.: A47J 31/40

(54) **Machine et procédé de préparation et de distribution automatiques de boissons solubles**

(30) Priorité: 25.03.2002 FR 0203675
(71) Demandeur: Vittecoq, Bruno, 85000 La Roche sur Lyon (FR)
(72) Inventeur: Vittecoq, Bruno, 85000 La Roche sur Lyon (FR)
(74) Mandataire: Fosse, Danièle

(57) **Abrégé**

L'invention concerne un procédé de préparation, à partir de produits (12) pulvérulents, de boissons solubles, dans un gobelet (1) de service d'une machine de distribution automatique de boisson.

Ce procédé est caractérisé en ce qu'il consiste à injecter, de manière simultanée et/ou en alternance à l'intérieur du gobelet (1), au moins deux jets d'eau chaude, à orienter l'un des jets dit jet (6) de fond en direction du fond (1A) du gobelet (1) et à orienter l'autre jet (7, 8) dit latéral en direction de la paroi (1B) latérale du gobelet (1), la trajectoire de ce jet (7, 8) latéral formant un angle différent de 90° avec la tangente du gobelet passant par le point d'impact du jet sur ladite paroi (1B) latérale pour créer notamment un mouvement tourbillonnaire de la masse de fluide en mélange.

Application : préparations de boissons instantanées.

## Description

La présente invention concerne un procédé de préparation, à partir de produits pulvérulents, de boissons solubles, dans un gobelet de service d'une machine de distribution automatique de boisson ainsi qu'une machine de distribution automatique de boissons permettant notamment la mise en oeuvre d'un tel procédé.

Les machines de distribution automatique, dans un gobelet, de boisson obtenue à partir de produits pulvérulents sont bien connues à ceux versés dans cet art. L'état de la technique permet de distinguer deux grandes catégories de machines. La première catégorie concerne des machines du type dans lesquelles une dose de matière pulvérulente est introduite dans un bol mixeur parallèlement à une quantité de liquide. L'ensemble est mélangé puis amené par des tuyaux jusqu'au gobelet. Il en résulte une mise en contact régulière des tuyaux plastiques avec les boissons. Cette mise en contact nécessite un nettoyage régulier et une surveillance constante afin d'assurer une hygiène parfaite. De ce fait, lors du passage de l'approvisionneur de telles machines, ce dernier doit systématiquement nettoyer les bols mixeurs et rincer les tuyaux, voire les remplacer, ce qui engendre des pertes de temps non négligeables.

Pour surmonter ces problèmes de maintenance et d'hygiène, une seconde catégorie de machine a été développée. Cette seconde catégorie concerne des machines dont les gobelets sont soit conditionnés à l'état pré-rempli, avec une dose du produit pulvérulent, soit remplis d'une dose de produit pulvérulent à l'état sec dans la machine. De ce fait, une fois la dose de produit pulvérulent dans le gobelet, ces gobelets sont simplement mis en contact avec au moins un jet d'eau chaude. Il en résulte une hygiène parfaite de l'ensemble mais une qualité médiocre des produits obtenus du fait de l'absence d'une opération de mixage.

Le brevet US-A-4.388.338 illustre de telles machines dans lesquelles les jets d'eau chaude sont inaptes du fait de leur orientation à créer une quelconque fonction de mixage. L'apport essentiel d'eau s'effectue par l'intermédiaire d'un écoulement d'eau à la pression atmosphérique et non sous forme d'un jet. Les jets sont quant à eux dirigés en direction de la paroi de fond du gobelet.

La machine décrite dans le brevet EP-A-0.373.126 illustre une machine plus perfectionnée dans laquelle une tête rotative est équipée de deux buses aptes à produire deux jets, l'un orienté en direction de la face formant fond du gobelet, l'autre en direction d'une face latérale du gobelet. Toutefois, l'effet de mixage du fluide est obtenu par la rotation de la tête et non par une orientation des jets, ce qui rend l'ensemble plus complexe et donc plus onéreux. Cette rotation de la tête est rendue nécessaire par le disposition des sorties de buses disposées dans un même plan passant par l'axe géométrique du gobelet.

Il est encore connu par le document GB-A-1.367.354 une machine de distribution automatique de boisson comportant une tête de buses et/ou un support de gobelet rotatif(s) pour effectuer l'opération de mixage.

Un but de la présente invention est de proposer un procédé et une machine de distribution automatique de boissons dont les conceptions permettent d'effectuer un mixage par pression d'eau directement dans le gobelet sans contact de pièces de la machine avec les boissons préparées, l'effet de mixage pouvant être obtenu exclusivement au moyen des jets en l'absence de toute pièce rotative.

Un autre but de la présente invention est de proposer un procédé et une machine dont les conceptions permettent l'obtention de produits dont la qualité est conforme à celle obtenue avec des installations traditionnelles à bol mixeur.

Un but de la présente invention est de proposer un procédé et une machine dont les conceptions permettent une adaptation rapide à diverses recettes.

A cet effet, l'invention a pour objet un procédé de préparation, à partir de produits pulvérulents, de boissons solubles, dans un gobelet de service d'une machine de distribution automatique de boisson, du type consistant à injecter, de manière simultanée et/ou en alternance à l'intérieur du gobelet, au moins deux jets d'eau chaude sous pression, à orienter l'un des jets dit jet de fond en direction du fond du gobelet pour créer notamment par contact avec la paroi de fond du gobelet des remous destinés à assurer une dissolution d'un produit pulvérulent introduit dans le gobelet et à orienter au moins un autre jet dit latéral en direction de la paroi latérale du gobelet, caractérisé en ce qu'il consiste à injecter au moins l'un des jets dit latéral à l'intérieur du gobelet suivant une orientation dans laquelle la trajectoire de ce jet latéral forme un angle différent de 90° avec la tangente du gobelet passant par le point d'impact du jet sur ladite paroi latérale pour créer notamment un mouvement tourbillonnaire de la masse de fluide en mélange.

L'utilisation de jets d'eau chaude à orientation prédéterminée permet d'obtenir un effet de mixage et un effet de mélange du liquide et du produit pulvérulent. Cette combinaison des jets permet d'obtenir un rendu du produit conforme à celui des produits traditionnels par la combinaison des jets qui permettent notamment une finition du produit, le jet latéral autorisant par ailleurs selon les circonstances, un nettoyage de la paroi latérale du gobelet et/ou une neutralisation des projections sur ladite paroi latérale.

Selon un mode de mise en oeuvre préféré du procédé, on envoie, en direction de la paroi latérale du gobelet, deux jets d'eau chaude dont les points d'impact sur la paroi latérale se situent à des hauteurs différentes de manière à former respectivement un jet latéral supérieur et un jet latéral inférieur.

L'invention a encore pour objet une machine de préparation et de distribution automatique de boissons solubles dans un gobelet de service positionnable en un emplacement déterminé de ladite machine, cette machine comprenant au moins des moyens de distribution de produits solubles à l'état pulvérulent directement dans le gobelet de service, un dispositif de pompage, un générateur de chauffage, ce générateur de chauffage étant raccordé à un bloc électrovannes, le bloc électrovannes étant lui-même associé à un bloc injecteur dont les sorties sont orientées pour produire au moins deux jets sous pression atteignant l'un le fond du gobelet, l'autre une paroi latérale de ce même gobelet, caractérisée en ce que le bloc injecteur forme un ensemble de préférence stationnaire, y compris en position d'utilisation de la machine, et en ce qu'au moins l'une des sorties, de préférence stationnaires, du bloc injecteur orientée pour produire un jet dit latéral en direction de la paroi latéral du gobelet est agencée de manière telle que la trajectoire du jet latéral forme un angle différent de 90° avec la tangente du gobelet passant par le point d'impact du jet sur ladite paroi latérale.

Grâce à cette configuration et à cette orientation des sorties du bloc injecteur, il peut en résulter un mixage obtenu exclusivement au moyen des jets.

Selon un mode de réalisation préférée de la machine, le bloc injecteur comporte au moins trois sorties, l'une orientée pour atteindre par un jet de fond la paroi de fond du gobelet, une deuxième intermédiaire orientée pour atteindre, par un jet intermédiaire, la paroi latérale du gobelet, la troisième étant orientée pour générer un jet dont le point d'impact est situé sur la paroi latérale du gobelet au-dessus du point d'impact du jet intermédiaire.

Une telle machine de distribution permet en particulier la mise en oeuvre d'un procédé du type précité.

L'invention sera bien comprise à la lecture de la description suivante d'exemples de réalisation, en référence aux dessins annexés dans lesquels :
la figure 1 représente une vue schématique de face d'un gobelet équipé d'un bloc injecteur ;
la figure 2 représente une vue schématique de dessus du gobelet de la figure 1 avec une représentation schématique de la trajectoire des jets ;
la figure 3 représente une vue schématique d'une machine conforme à l'invention et

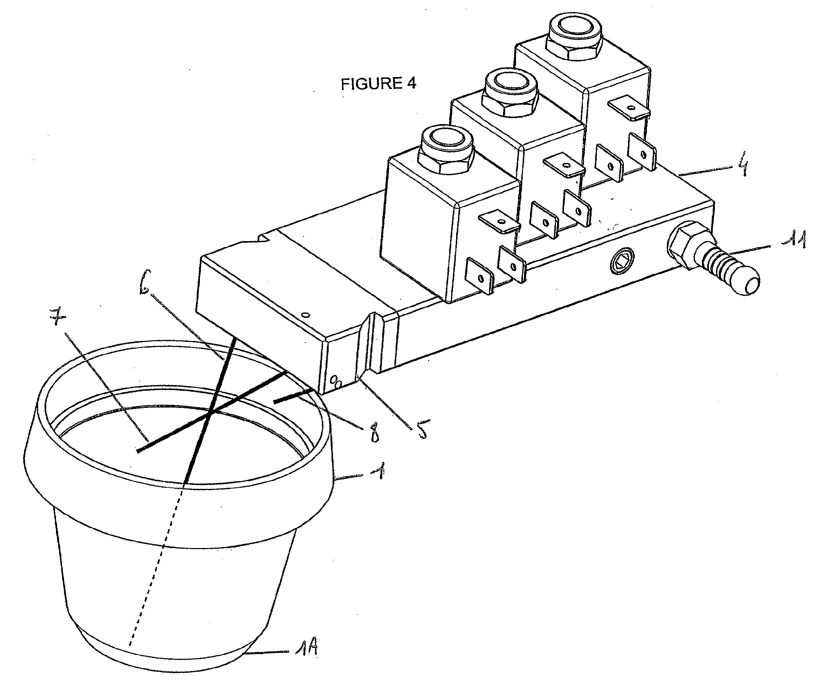

la figure 4 représente une vue schématique de l'ensemble formé par un bloc électrovannes, un bloc injecteur et le gobelet.

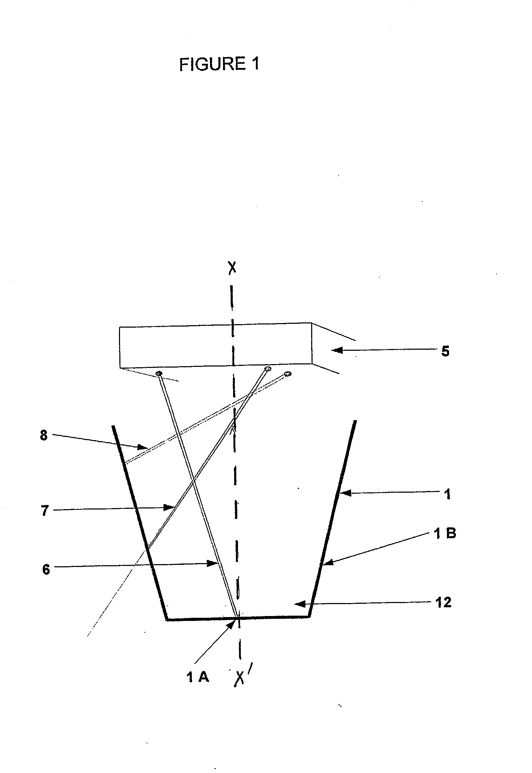

Comme mentionné ci-dessus, le procédé, objet de l'invention, est destiné à permettre la préparation, à partir de produits 12 pulvérulents, de boissons solubles, telles que boissons chocolatées, café court, café long, thé, potage ou autres, dans un gobelet 1 de service d'une machine de distribution automatique de boisson. Ce gobelet 1 affecte généralement la forme d'un corps tronconique à parois à allure convergente en direction de la face formant fond du gobelet. Ce gobelet est ainsi organisé autour d'un axe géométrique représenté en XX' à la figure 1. Les produits pulvérulents utilisés ont pour caractéristique d'être solubles dans un liquide porté à une température généralement de l'ordre de 60°C, ce liquide étant généralement constitué par de l'eau chaude. La mise en oeuvre d'un tel procédé consiste à injecter, de manière simultanée et/ou en alternance, à l'intérieur du gobelet positionnable en un emplacement déterminé au moins deux jets d'eau chaude. L'un des jets, dit jet 6 de fond, est orienté en direction du fond du gobelet 1 pour créer notamment, par contact avec la paroi 1A de fond du gobelet, des remous destinés à assurer une dissolution d'un produit 12 pulvérulent introduit dans le gobelet 1 tandis qu'au moins un autre jet 7 ou 8, dit latéral, est orienté en direction de la paroi 1B latérale du gobelet 1, la trajectoire de ce jet 7, 8 latéral formant un angle différent de 90° avec la tangente du gobelet passant par le point d'impact du jet sur ladite paroi 1B latérale du gobelet 1 pour créer notamment un mouvement tourbillonnaire de la masse de fluide en mélange. En d'autres termes, la trajectoire de ce jet latéral s'étend d'un côté ou de l'autre d'un plan perpendiculaire à la tangente du gobelet passant par le point d'impact du jet sur ladite paroi latérale et par l'axe géométrique XX' du gobelet.

Dans l'exemple représenté à la figure 1, le jet de fond est représenté par la référence 6 tandis que les jets latéraux sont représentés respectivement par les références 7 et 8. En effet, dans l'exemple représenté, on envoie, en direction de la paroi 1B latérale du gobelet 1, deux jets 7, 8 d'eau chaude dont les points d'impact sur la paroi 1B latérale se situent à des niveaux ou hauteurs différents de manière à former respectivement un jet 8 latéral supérieur et un jet 7 latéral inférieur. Ainsi, dans l'exemple représenté, on envoie le jet 8 d'eau chaude dit latéral supérieur à un niveau supérieur au niveau du point d'impact du jet latéral 7, dit jet latéral inférieur, c'est-à-dire que son point d'impact se situe au-dessus du point d'impact du jet latéral 7 inférieur. On note que ce jet 8 latéral supérieur est orienté de manière telle qu'il forme, avec la tangente du gobelet 1 passant par le point d'impact du jet sur la paroi 1B latérale du gobelet 1, un angle α1 inférieur à l'angle α2 formé par le jet 7 latéral inférieur avec la paroi 1B latérale. De préférence, le jet latéral inférieur 7 forme avec la tangente du gobelet passant par le point d'impact du jet sur ladite paroi un angle α2 compris dans la plage [40° - 85°], de préférence [55° - 85°] et de préférence encore voisin de 70°. Ce jet latéral inférieur 7 est par ailleurs incliné par rapport à la face 1A formant fond du gobelet 1 d'un angle compris dans la plage [115° - 139°], de préférence voisin de 128°. De manière analogue, le jet latéral supérieur 8 forme avec la tangente du gobelet passant par le point d'impact du jet sur ladite paroi un angle compris dans la plage [25° - 50°], de préférence voisin de 38° et est incliné par rapport à la face formant fond du gobelet d'un angle compris dans la plage [148° - 172°], de préférence voisin de 160°. Le jet 6 de fond forme quant à lui avec la paroi de fond du gobelet un angle compris dans la plage [70° - 94°], de préférence voisin de 82°. Chaque jet ainsi décrit a une fonction différente.

Le jet 6 de fond, par exemple d'un débit de 0,5 litre à la minute et d'une pression de 0,15 bar, est destiné à apporter l'essentiel de la quantité d'eau de la boisson. Il crée des remous qui ont pour but d'accélérer la dissolution et de mélanger le produit 12 pulvérulent. Ce jet peut intervenir à n'importe quel moment lors d'un cycle de fabrication d'une boisson soluble. Il est à noter qu'à chaque fois, ce jet 6 peut être utilisé en simultané ou en alternance avec les jets 7, 8 latéraux. De la même manière, on pilote la durée et le nombre des injections d'eau chaude en simultané et/ou en alternance avec l'injection volumétrique des produits secs pulvérulents. Cela signifie que l'alimentation des produits 12 pulvérulents peut s'effectuer également de façon continue ou discontinue. Tous ces produits pulvérulents peuvent être prédisposés dans le gobelet ou bien être amenés dans le gobelet après introduction de liquide à l'intérieur du gobelet. Des exemples de cycle de fabrication de boissons seront fournis ci-après.

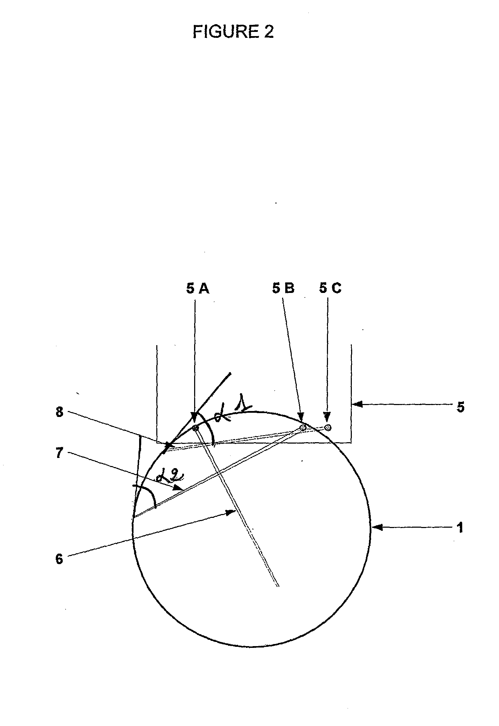

Le jet 7 latéral à point d'impact inférieur peut être par exemple d'un débit de 0,35 litre/min et d'une pression de 2,2 bars. Il est dirigé sur la paroi du gobelet avec un angle d'environ 55° par rapport à la tangente à celle-ci dans l'exemple représenté à la figure 2. Ce jet a plusieurs fonctions. Il permet de fouetter la partie basse d'un produit, ce qui crée un tourbillon et mixe la boisson lorsque l'on prépare une boisson courte, telle qu'un café dit "expresso" et de débuter le mixage d'une boisson normale telle qu'un chocolat, etc. Sur les boissons courtes uniquement, il permet de créer le fini du produit sous forme d'une crème. Le jet 8 latéral à point d'impact supérieur est d'un débit et d'une pression sensiblement similaires à ceux du jet 7 latéral à point d'impact inférieur. Il est dirigé sur la partie haute du gobelet 1 avec un angle d'environ 40° par rapport à la tangente à la paroi latérale de ce dernier. Ce jet permet de fouetter la partie haute du produit, ce qui a pour but de mixer la partie haute de la boisson et contribue également au fini du produit. Sur les boissons courtes, il permet de nettoyer le bord intérieur du gobelet des salissures provoquées soit par le jet 7 latéral inférieur au moment du mixage, soit par le jet 6 de fond. Ce dernier jet 8 peut également avoir pour fonction, lorsqu'il est utilisé en premier au cours d'un cycle de fabrication d'une boisson, de faire adhérer, dans un premier temps, le produit 12 sous forme pulvérulente au fond du gobelet pour éviter les projections lorsque le jet 6 de fond prend le relais. Bien évidemment, la fonction de chaque jet peut être optimisée en fonction de la cadence et de l'ordre des jets. Il en résulte un produit fini dont la qualité peut varier par action sur ces paramètres. De même, la distance entre la sortie des jets et le gobelet 1 ainsi que la température de l'eau agissent sur la qualité des produits obtenus. Généralement, on accroît la pression du ou des jets 7, 8 latéraux par rapport à la pression initiale du jet 6 dit de fond.

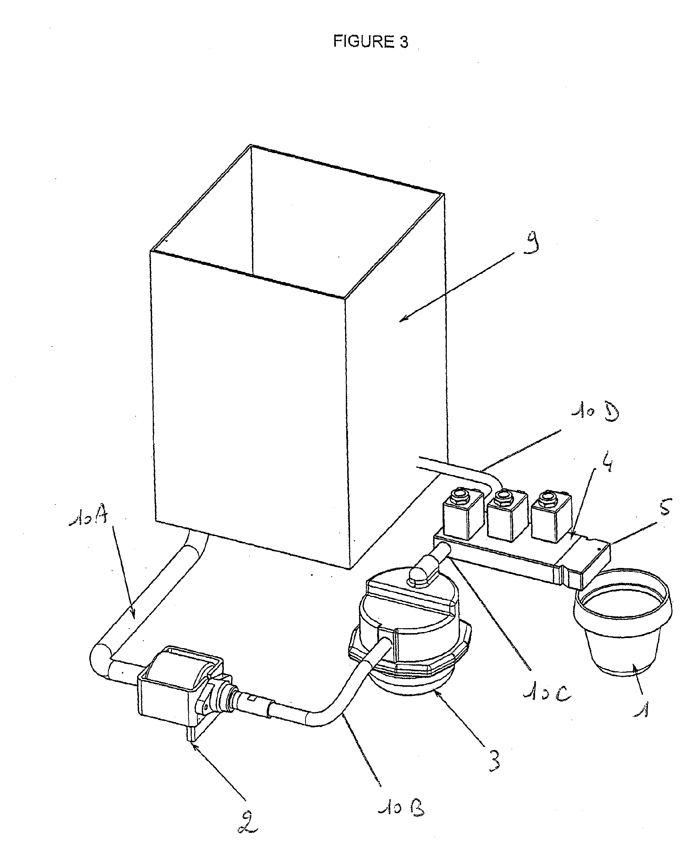

Pour permettre la mise en oeuvre d'un tel procédé, on utilise en particulier une machine conforme à celle représentée à la figure 3. Cette machine comporte notamment des moyens (non représentés) de distribution de produits 12 solubles à l'état pulvérulent directement dans le gobelet 1 de service, préalablement positionné en un emplacement déterminé soit manuellement, soit automatiquement par des moyens (non représentés) appropriés bien connus à ceux versés dans cet art. Cette machine comporte encore un dispositif 2 de pompage généralement intercalé entre un réservoir 9 d'eau et un générateur 3 de chauffage qui peut être constitué par un chauffe-eau traditionnel. Le générateur 3 de chauffage est lui-même raccordé à un bloc 4 électrovannes en soi connue.

De manière caractéristique, le bloc 4 électrovannes de cette machine de distribution est lui-même associé à un bloc 5 injecteur de préférence stationnaire, c'est-à-dire non mobile, en particulier non rotatif, en position d'utilisation de la machine lors de la préparation d'une boisson. Les sorties de préférence stationnaires sont orientées pour produire des jets atteignant l'un le fond 1B du gobelet 1, l'autre ou les autres, une paroi 1A latérale de ce même gobelet 1. Bloc 5 injecteur et bloc 4 électrovannes peuvent être réalisés d'une seule pièce. De préférence, toutefois, le bloc 5 injecteur est monté amovible sur le bloc 4 électrovannes par l'intermédiaire par exemple d'un montage à encliquetage. Le bloc 5 injecteur peut ainsi comporter au moins trois sorties 5A, 5B, 5C, l'une 5A orientée pour atteindre par un jet 6 de fond la paroi 1A de fond du gobelet 1, une deuxième 5B intermédiaire orientée pour atteindre, par un jet 7 intermédiaire dit latéral, la paroi 1B latérale du gobelet 1, la troisième 5C étant orientée pour générer un jet 8 supplémentaire latéral dont le point d'impact est situé sur la paroi 1B latérale du gobelet 1 à un niveau différent du niveau du point d'impact du jet 7 intermédiaire, en l'occurrence ici à un niveau supérieur, c'est-à-dire au-dessus du point d'impact du jet 7 intermédiaire. Ces sorties sont conformées pour permettre l'obtention de jets conformes à ceux décrits dans le cadre du procédé. Ainsi, au moins l'une des sorties du bloc 5 injecteur, orientée pour produire un jet 7, 8 dit latéral en direction de la paroi 1B latérale du gobelet 1, est agencée de manière telle que la trajectoire du jet 7, 8 latéral forme un angle différent de 90° avec la tangente du gobelet 1 passant par le point d'impact du jet sur ladite paroi 1B latérale. Ainsi, les conduits des sorties 5B et 5C destinés à permettre l'évacuation des jets latéraux sont disposés pour ne pas s'étendre dans un plan radial au gobelet et sont décalés axialement de l'axe géométrique du gobelet.

De manière plus détaillée, les sorties 5A, 5B, 5C du bloc 5 injecteur peuvent être écartées l'une de l'autre d'une distance comprise dans la plage [4,5 mm - 45 mm] . Les conduits des sorties 5A, 5B forment entre eux un angle compris dans la plage [70° - 110°], de préférence [79° - 101°] tandis que les conduits des sorties 5A et 5C forment entre eux un angle compris dans la plage [50° - 85°], de préférence [59° - 81°]. Le diamètre de ces conduits est compris dans la plage [0,4 mm - 3,0 mm].

Bien évidemment, cette machine comporte encore des moyens de pilotage de la durée et du nombre des injections d'eau chaude, ce pilotage s'effectuant en simultanée ou en alternance avec l'injection volumétrique des produits secs. Ainsi, dans le cadre d'une telle machine, l'eau issue du réservoir 9 est mise sous pression par la pompe 2 et est dirigée vers le générateur 3 de chauffage ou chauffe-eau où elle est portée à une température de l'ordre de 60°C environ. Le bloc 4 électrovannes est raccordé directement sur le générateur 3 de chauffage afin d'être placé à la même température que celui-ci. Ce bloc 4 électrovannes est généralement une pièce usinée ou moulée en laiton percée de multiples conduits et filetée à différents emplacements afin d'y monter les cheminées d'électrovanne et d'y incorporer un clapet 11 de surcharge. Le bloc 5 injecteur est quant à lui une pièce en laiton percée de trois conduits dont les sorties sont calibrées avec des angles définis. Ce bloc 5 injecteur vient s'encliqueter à la sortie du bloc 4 électrovannes, l'étanchéité entre ces deux blocs étant assurée par des joints tels que des joints toriques. Les électrovannes sont bien sûr commandées par un automate. Tous les éléments précités de la machine sont raccordés par des tubulures représentées en 10A, 10B, 10C, 10D à la figure 3. Comme mentionné ci-dessus, la pression, la cadence et la durée des jets varient en fonction des caractéristiques du produit pulvérulent, de la forme du gobelet 1 et de la boisson à réaliser.

Il est fourni ci-après quelques exemples de réalisation d'une boisson.

Ainsi, pour la préparation d'une boisson chocolatée, on active successivement le jet 6 dit de fond, le jet 7 latéral inférieur et le jet 8 latéral supérieur et on introduit, entre chaque activation de jet, une quantité prédéterminée de produit 12 pulvérulent de préparation de boisson chocolatée. En effet, l'une des caractéristiques des matériaux constitutifs d'une boisson chocolatée est sa forte densité. Il en résulte l'obligation d'introduire progressivement lesdits matériaux au cours d'un cycle de fabrication d'une telle boisson. Ainsi, le jet 6 entre en action 1,5 seconde. Une première dose de produit tombe dans le gobelet. Le jet 7 entre ensuite en action 1,5 seconde puis une autre dose de produit tombe dans le gobelet. Cette opération d'actionnement du jet 7 et d'introduction d'une dose de produit se répète quatre fois. Le jet 8 entre alors en action pendant 1,5 seconde puis une autre dose de produit tombe dans le gobelet. A nouveau, cette opération d'introduction d'un jet 8 et d'une dose de produit se répète trois fois. Le jet 8 reste encore en action pendant 2 secondes.

De manière analogue, pour la préparation d'un café court ou long, on introduit la dose du produit 12 à l'état pulvérulent dans le gobelet 1. On active successivement avec des phases de recouvrement partiel le jet 8 latéral supérieur, le jet 6 de fond puis à nouveau le jet 8 latéral supérieur avant d'activer, dans le cas d'un café court, le jet 7 latéral inférieur. Ainsi, dans le cas d'une préparation d'un café court, la dose de café lyophilisé tombe dans le gobelet. Le jet 8 entre en action pendant 0,5 seconde. 0,1 seconde avant la fin du jet 8, le jet 6 entre en action pendant 4,7 secondes. 0,6 seconde après le commencement du jet 6, le jet 8 reprend pendant 5,5 secondes. 4,7 secondes après la fin du jet 8 (temps d'infusion), le jet 7 entre en action pendant 2,3 secondes pour former la crème du produit. Le jet 8 a ici pour fonction d'éviter les éclaboussures lors de l'envoi du jet 6. De manière analogue, pour la préparation d'un thé, on introduit la dose de produit 12 à l'état pulvérulent. On active le jet 8 latéral supérieur puis le jet 6 de fond.

Bien évidemment, d'autres combinaisons des jets peuvent être envisagées.

## Revendications

1. Procédé de préparation, à partir de produits (12) pulvérulents, de boissons solubles, dans un gobelet (1) de service d'une machine de distribution automatique de boisson, du type consistant à injecter, de manière simultanée et/ou en alternance à l'intérieur du gobelet (1), au moins deux jets (6, 7, 8) d'eau chaude sous pression, à orienter l'un des jets dit jet (6) de fond en direction du fond du gobelet (1) pour créer notamment par contact avec la paroi (1A) de fond du gobelet des remous destinés à assurer une dissolution d'un produit (12) pulvérulent introduit dans le gobelet (1) et à orienter au moins un autre jet (7, 8) dit latéral en direction de la paroi (1B) latérale du gobelet (1),
**caractérisé en ce qu'**il consiste à injecter au moins l'un des jets dit latéral à l'intérieur du gobelet suivant une orientation dans laquelle la trajectoire de ce jet (7, 8) latéral forme un angle différent de 90° avec la tangente du gobelet (1) passant par le point d'impact du jet sur ladite paroi (1B) latérale pour créer notamment un mouvement tourbillonnaire de la masse de fluide en mélange.

2. Procédé de préparation selon la revendication 1,
**caractérisé en ce qu'**on envoie, en direction de la paroi (1B) latérale du gobelet (1), deux jets (7, 8) d'eau chaude dont les points d'impact sur la paroi (1B) latérale se situent à des hauteurs différentes de manière à former respectivement un jet (8) latéral supérieur et un jet (7) latéral inférieur.

3. Procédé de préparation selon la revendication 2,
**caractérisé en ce qu'**on oriente le jet (8) latéral supérieur de manière telle qu'il forme, avec la tangente du gobelet (1) passant par le point d'impact du jet sur la paroi (1B) latérale du gobelet (1), un angle inférieur à l'angle formé par le jet (7) latéral inférieur avec la paroi (1B) latérale.

4. Procédé de préparation selon l'une des revendications 1 à 3,
**caractérisé en ce qu'**on pilote la durée et le nombre des injections d'eau chaude en simultané et/ou en alternance avec l'injection volumétrique des produits secs pulvérulents.

5. Procédé de préparation selon l'une des revendications 1 à 4,
**caractérisé en ce qu'**on accroît la pression du ou des jets (7, 8) latéraux par rapport à la pression initiale du jet (6) dit de fond.

6. Procédé de préparation selon l'une des revendications 2 à 5,
**caractérisé en ce que**, pour la préparation d'une boisson chocolatée, on active successivement le jet (6) dit de fond, le jet (7) latéral inférieur et le jet (8) latéral supérieur et **en ce qu'**on introduit, entre chaque activation de jet, une quantité prédéterminée de produit pulvérulent de préparation de boisson chocolatée.

7. Procédé de préparation selon l'une des revendications 2 à 5,
**caractérisé en ce que**, pour la préparation d'un café court ou long, on introduit une dose du produit (12) à l'état pulvérulent dans le gobelet (1), on active successivement avec des phases de recouvrement partiel le jet (8) latéral supérieur, le jet (6) de fond puis à nouveau le jet (8) latéral supérieur avant d'activer, dans le cas d'un café court, le jet (7) latéral inférieur.

8. Procédé de préparation selon l'une des revendications 2 à 5,
**caractérisé en ce que**, pour la préparation d'un thé, on introduit une dose de produit (12) à l'état pulvérulent, on active le jet (8) latéral supérieur puis le jet (6) de fond.

9. Machine de préparation et de distribution automatique de boissons solubles dans un gobelet (1) de service positionnable en un emplacement déterminé de ladite machine, cette machine comprenant au moins des moyens de distribution de produits (12) solubles à l'état pulvérulent directement dans le gobelet de service, un dispositif (2) de pompage, un générateur (3) de chauffage, ce générateur (3) de chauffage étant raccordé à un bloc (4) électrovannes, le bloc (4) électrovannes étant lui-même associé à un bloc (5) injecteur dont les sorties sont orientées pour produire au moins deux jets sous pression atteignant l'un (6) le fond du gobelet (1), l'autre (7, 8) une paroi latérale (1B) de ce même gobelet (1),
**caractérisée en ce que** le bloc (5) injecteur forme un ensemble de préférence stationnaire, y compris en position d'utilisation de la machine, et **en ce qu'**au moins l'une des sorties de préférence stationnaires du bloc (5) injecteur orientée pour produire un jet (7, 8) dit latéral en direction de la paroi (1B) latérale du gobelet (1) est agencée de manière telle que la trajectoire du jet (7, 8) latéral forme un angle différent de 90° avec la tangente du gobelet (1) passant par le point d'impact du jet sur ladite paroi (1B) latérale.

10. Machine de distribution automatique de boissons selon la revendication 9,
**caractérisée en ce que** le bloc (5) injecteur comporte au moins trois sorties (5A, 5B, 5C), l'une (5A) orientée pour atteindre par un jet (6) de fond la paroi (1A) de fond du gobelet (1), une deuxième (5B) intermédiaire orientée pour atteindre, par un jet (7) intermédiaire, la paroi (1B) latérale du gobelet (1), la troisième (5C) étant orientée pour générer un jet (8) dont le point d'impact est situé sur la paroi (1B) latérale du gobelet (1) à un niveau supérieur à celui du point d'impact du jet (7) intermédiaire.

11. Machine de distribution automatique de boissons selon l'une des revendications 9 et 10,
**caractérisée en ce que** le bloc (5) injecteur est monté amovible sur le bloc (4) électrovannes.
